# EUROPEAN PATENT APPLICATION

(11) **EP 2 629 196 A1**
(43) Date of publication of application: **21.08.2013**
(21) Application number: 13155675.5
(22) Date of filing: 18.02.2013
(51) Int. Cl.: G06F 9/44, H04N 21/45, H04N 21/47, H04N 21/488

(54) **Display apparatus and control method thereof**

(30) Priority: 20.02.2012 KR 20120016858
(71) Applicant: Samsung Electronics Co., Ltd, Gyeonggi-do 443-742 (KR)
(72) Inventor: Song, In-jee, Seoul (KR); Shin, Seung-min, Gyeonggi-do (KR); Lee, Hee-ran, Gyeonggi-do (KR); Choi, Sung-wook, Seoul (KR); Lee, Hye-jeong, Seoul (KR)
(74) Representative: Hewett, Jonathan Michael Richard

(57) **Abstract**

A display apparatus includes: a display unit which is configured to display a manual information image of the display apparatus; a storage unit which stores pieces of manual information in correspondence to information of user levels of the display apparatus; and a controller which determines a user level based on the stored user level information upon occurrence of an event for displaying the manual information image, and displays the manual information image formed by at least one of the pieces of the manual information stored in the storage unit.

## Description

The present invention relates to displaying an image based on an image signal, and more particularly, to displaying a manual of various functions provided by the display apparatus for a user.

A display apparatus processes an image signal input from an external image supply source and displays an image on a display panel, such as a liquid crystal display (LCD), based on the processed image signal. A display apparatus may include a television (TV), a monitor, a portable multimedia device, etc. For example, a display apparatus, such as a TV, tunes, decodes, and performs other various processes with respect to a broadcasting signal provided from the external source, and provides an image of a desired broadcasting channel.

With the development of technology and increased contents amount, the display apparatuses utilize higher data processing speed and capacity and perform and provide more diverse and complicated functions beyond simple provision of image contents. As the functions of the display apparatus have extended and become complex, the display apparatus may display a manual information image explaining a particular function. However, different users may desire the manual information to be displayed in different manner.

According to an aspect of an exemplary embodiment of the present invention, there is provided a display apparatus including: a display unit which is configured to display a manual information image of the display apparatus; a storage unit which stores pieces of manual information in correspondence to information of user levels of the display apparatus; and a controller which determines a user level based on the stored user level information if an event for displaying the manual information image is occurred, and displays the manual information image formed by at least one of the pieces of the manual information selected differently corresponding to the determined user level among the pieces of the manual information stored in the storage unit.

If the event for displaying the manual information image relates to a first function, the controller determines the user level corresponding to the first function.

The user level corresponding to the first function may include a degree of skill of a user with respect to the first function.

The controller may store each of usage pattern information of the plurality of functions provided by the display apparatus, and may determine the user level corresponding to the plurality of functions based on the usage pattern information.

The plurality of functions provided by the display apparatus may be grouped into a plurality of categories, and the controller may select the category in which the first function is included, among the plurality of categories, and may determine the user level with respect to the selected category.

The user level may include a degree of usage skill of a user with respect to the plurality of functions included in the selected category.

The controller may add a content of a second function of the category in which the first function is not included, to the manual information image and displays such manual information image.

The manual information may include a plurality of constructed data which explains the function in different manners, and the controller may generate the manual information image by differently selecting the plurality of constructed data according to the determined user level.

The controller may select the data so that the manual information image is more simplified in the case where the user level is higher with respect to the first function than in the case the user level is lower with respect to the first function.

The controller may set the number of the manual information images converted and displayed for preset display time to be more in the case where the user level is higher with respect to the first function than in the case where the user level is lower with respect to the first function.

According to an aspect of another exemplary embodiment, there is provided a control method of a display apparatus including: generating an event for displaying a manual information image of a display apparatus; determining a user level based on user levels information pre-stored in the display apparatus; and displaying the manual information image formed by at least one piece of manual information selected differently corresponding to the determined user level among a plurality of pieces of manual information pre-stored in the display apparatus.

The user level corresponding to the first function may include a degree of skill of a user with respect to the first function.

The determining the user level corresponding to the first function may include determining the user level corresponding to a plurality of functions provided by the display apparatus based on usage pattern information stored in advance with respect to the plurality of functions.

The plurality of functions provided by the display apparatus may be grouped into a plurality of categories, and the determining the user level corresponding to the first function may include selecting the category in which the first function is included among the plurality of categories and determining the user level for the selected category.

The user level may include a degree of usage skill of a user with respect to a plurality of functions included in the selected category.

The displaying the manual information image may further include adding and displaying a content of a second function of the category in which the first function is not included, to/in the manual information image.

The manual information may include a plurality of constructed data which explains the function in different manners, and the displaying the manual information image may include generating the manual information image by differently selecting the plurality of constructed data according to the determined user level.

The generating the manual information image may include selecting the data to make the manual information image simpler in the case of a higher user level for the first function than in the case of a lower user level for the first function.

The generating the manual information image may include setting the number of the manual information images converted and displayed for preset display time to be more in the case of a higher user level for the first function than in the case of a lower user level for the first function.

According to an aspect of another exemplary embodiment, there is provided a method including: storing usage patterns related to usage skill levels for different users with respect to a plurality of functions of a display apparatus; detecting a request event by a user, to display manual information images which explain an aspect of a first function of the plurality of functions; determining a usage skill level of the user of the request event based on the stored usage patterns of the user, corresponding to the first function; generating the manual information images with a complexity corresponding to the determined usage skill level; and displaying the manual information images on a display.

The above and/or other aspects will become more apparent by describing certain exemplary embodiments, with reference to the accompanying drawings, in which:
FIG. 1 is a block diagram of a display apparatus according to an exemplary embodiment;
FIG. 2 is a flowchart of a process for generating a manual information image according to an exemplary embodiment;
FIG. 3 illustrates an example of forming the manual information image according to a user level according to an exemplary embodiment;
FIG. 4 illustrates an example of converting and displaying a plurality of manual information images over time according to an exemplary embodiment;
FIG. 5 illustrates another example of converting and displaying a plurality of manual information images over time according to an exemplary embodiment; and
FIG. 6 is a flowchart of a control method according to an exemplary embodiment.

Certain exemplary embodiments are described in greater detail below with reference to the accompanying drawings. The exemplary embodiments may be embodied in various forms without being limited to exemplary embodiments set forth herein.

In the following description, like drawing reference numerals are used for the like elements, even in different drawings. The matters defined in the description, such as detailed construction and elements, are provided to assist in a comprehensive understanding of exemplary embodiments. However, exemplary embodiments can be practiced without those specifically defined matters. Also, well-known functions or constructions are not described in detail since they would obscure the application with unnecessary detail.

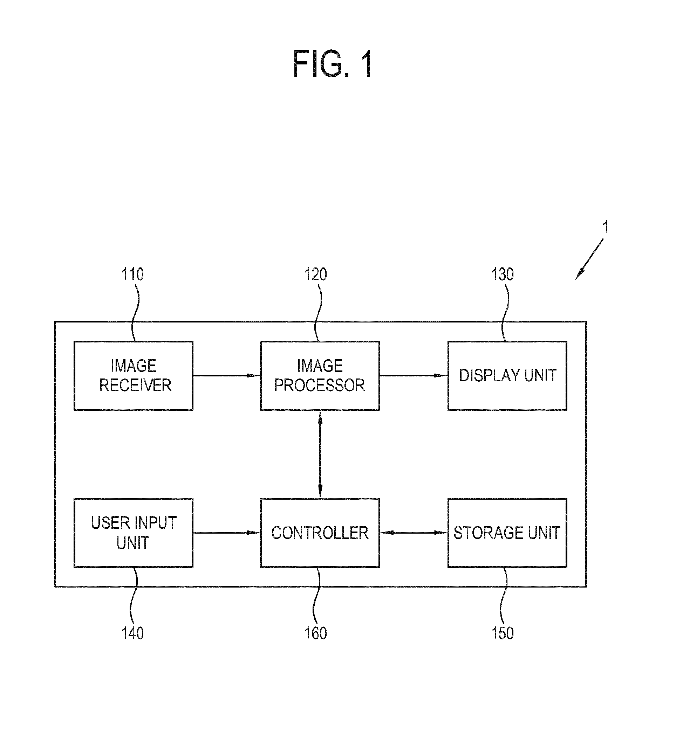

FIG. 1 is a block diagram of a display apparatus 1 according to an exemplary embodiment.

As described therein, a display apparatus 1 according to the present exemplary embodiment processes an image signal according to preset image processing operations and displays an image based on the processed image signal. The display apparatus 1 includes a TV which displays an image based on image signals, image data, and/or image information supplied by an external image supply source (not shown) or stored in the display apparatus 1.

The present inventive concept may be applicable to the display apparatus which is different from the above-described display apparatus 1, such as, for example, to a portable multimedia player (PMP), a mobile phone, etc. That is, an exemplary embodiment which is described hereinafter is an example to which various modifications can be made according to an embodiment of the system, and is not limiting.

The display apparatus 1 may display an image including a video image, a still image, an application, on screen display (OSD), and/or a graphic user interface (GUI) for various control operations, but not limited thereto.

In particular, the display apparatus 1 according to the present exemplary embodiment may display a manual information image which explains various functions of the display apparatus 1 in various manners. For example, the manual information includes a name and a category of the function, summary information, detail information, image, video, and various data.

Upon request from a user for displaying manual information of a predetermined function, the display apparatus forms and displays a manual information image including various data and provides a user with such manual information.

Hereinafter, elements of the display apparatus 1 are described.

The display apparatus 1 includes an image receiver 110 which receives an image signal from an external image supply source (not shown), an image processor 120 which processes an image signal received by the image receiver 110, a display unit 130 which displays an image based on the image signal processed by the image processor 120, a user input unit 140 which outputs a preset control command according to a user's manipulation, a storage unit 150 which stores data, and a controller 160 which controls overall operations of the display apparatus 1.

The image receiver 110 transmits an image signal supplied by at least one image supply source, via a wired connection or wirelessly, to the image processor 120, and varies depending on a standard of a received image signal or the embodiment type of the image supply source and the display apparatus 1. For example, the image receiver 110 may receive signals and/or data according to standards of radio frequency (RF) signals, high definition multimedia interface (HDMI), and/or universal serial bus (USB). If the image receiver 110 receives an RF signal, it may include a tuner to tune the RF signal.

The image processor 120 performs various image processing operations with respect to an image signal transmitted by the image receiver 110. The image processor 120 outputs the processed image signal to the display unit 130 so that the display unit 130 displays an image based on the processed image signal.

The image processor 120 performs image processing operations including a demultiplexing operation to demultiplex a predetermined signal into signals according to a signal type, a decoding operation corresponding to an image format of an image signal, a de-interlacing operation to convert an interlace image signal into a progressive image signal, a scaling operation to scale an image signal into a preset resolution, a noise reduction operation to improve an image quality, and/or a detail enhancement operation and conversion of a frame refresh rate, but not limited thereto.

The image processor 120 includes an image processing board (not shown) which is formed by circuits including various chipsets (not shown) and electronic parts (not shown) installed in a printed circuit board (not shown).

The display unit 130 displays an image based on an image signal output by the image processor 120. The display unit 130 may include liquid crystal, plasma, light-emitting diode (LED), organic light-emitting diode (OLED), surface-conduction electron-emitter, carbon nano-tube, and/or nano-crystal, but not limited thereto.

The display unit 130 may further include additional elements depending on embodiment type thereof. For example, if the display unit 130 includes liquid crystal, the display unit 130 includes a liquid crystal display (LCD) panel (not shown), a backlight unit (not shown) to emit light to the LCD panel, and a panel driving substrate (not shown) to drive the LCD panel.

The user input unit 140 transmits to the controller 160 various control commands or information according to a user's manipulation and input. The user input unit 140 includes a menu key and input panel installed in an external part of the display apparatus 1 or a remote controller which is separated or spaced from the display apparatus 1.

The user input unit 140 may be integrally formed with the display unit 130. That is, if the display unit 130 includes a touch screen, a user may transmit a command to the controller 160 through an input menu (not shown) displayed in the display unit 130.

The storage unit 150 stores data by a control of the controller 160. The storage unit 150 includes a non-volatile memory such as a flash memory and/or a hard disc drive. The storage unit 150 is accessed by the controller 160, to read, record, revise, delete, and/or update data, by the controller 160.

The controller 160 controls various control operations of components and elements of the display apparatus 1. For example, the controller 160 performs a control operation for receiving an image signal from the image receiver 110, for performing an image processing operation of the image processor 120 and for receiving a command of the user input unit 140 to thereby control the operations of the display apparatus 1.

With the foregoing configuration, the controller 160 may receive a command for requesting for manual information of a predetermined first function among various functions and services or interactions of the display apparatus 1. The storage unit 150 stores a manual information database of functions of the display apparatus 1. According to the request command, the controller 160 selects manual information of the first function from the database of the storage unit 150, and displays an image of the selected manual information on the display unit 130.

If there is a plurality of users who shares the display apparatus 1, such users have different usage patterns for the display apparatus 1, and a user level for each function of the display apparatus 1 varies. The user level relates to the degree of skill of a user for the concerned function, and more specifically, a quantified value to be used to compare the degree of understanding of a user for the concerned function.

For example, even in the same display apparatus 1, functions which are mainly used by users vary. A user may have a relatively higher degree of usage skill for a particular function while another user may have a relatively lower degree of usage skill for the same function, based, for example, on user's skills, frequency of use, etc.

If the controller 160 provides manual information of a first function without consideration of a user level, a user may receive unsuitable manual information. That is, the provided manual information may include large amount of unnecessary information for a user who has a higher degree of usage skill or may be insufficient for a user who has a lower degree of usage skill.

According to the present exemplary embodiment, the storage unit 150 stores a plurality of manual information for at least one of functions provided by the display apparatus 1, and stores user level information corresponding to each function provided by the display apparatus 1.

Upon occurrence of an event for displaying a manual image for a predetermined first function among at least one function, the controller 160 determines a user level corresponding to the first function based on the user level information stored in advance in the storage unit 150. The controller 160 selects manual information differently corresponding to the determined user level among the plurality of manual information stored for the first function, forms a manual information image and controls the display unit 130 to display the formed manual information image.

As the manual information image is displayed corresponding to the user level for the first function, the manual information image is provided selectively according to the degree of understanding of a user for such function and user's convenience is enhanced. That is, a simpler manual information image may be displayed for a user who has a higher degree of skill for the first function, and a more detailed manual information image may be displayed for a user who has a lower degree of skill, for the same first function.

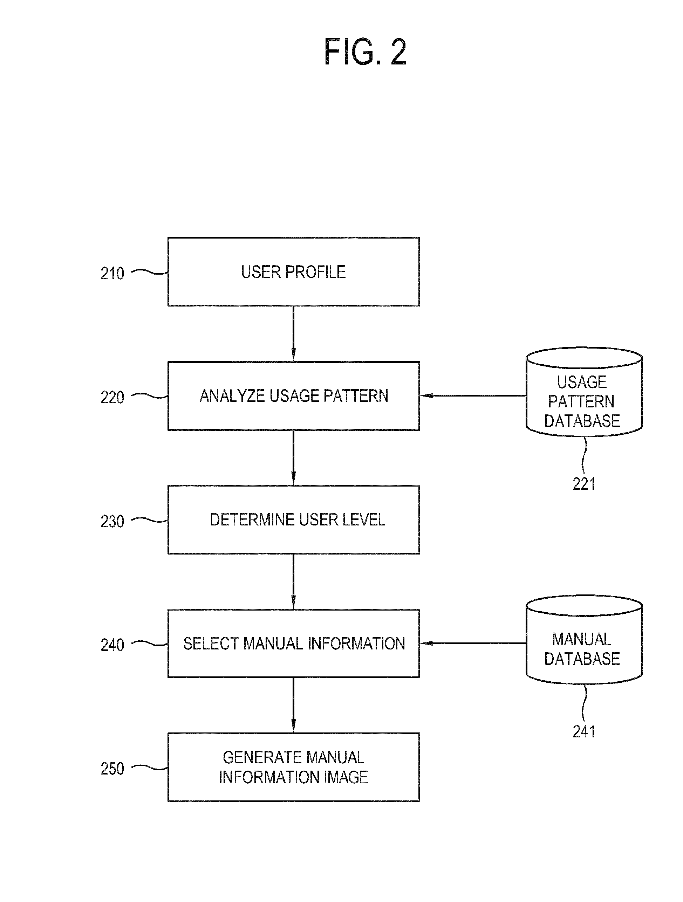

Hereinafter, a method of generating a manual information image corresponding to a user level is described with reference to FIG. 2. FIG. 2 is a flowchart of the method of generating the manual information image.

As shown therein, upon occurrence of an event for displaying a manual information image for a predetermined first function among various functions of the display apparatus 1 generated through the user input unit 140, the controller 160 identifies a user profile for the event occurred in operation 210.

If only one user profile is stored in the storage unit 150, the controller 160 selects the user profile. If a plurality of user profiles is stored in the storage unit 150, the controller 160 selects one of the user profiles based on user identification provided through the user input unit 140 or selects a user profile set as a default.

The controller 160 analyzes a usage pattern of the display apparatus 1 by a user in connection with the selected user profile in operation 220. The analysis of the usage pattern is performed on the basis of a usage pattern database 221 stored in the storage unit 150.

The usage pattern database 221 includes history information on a usage status of a user with respect to functions of the display apparatus 1. The controller 160 analyzes a type, frequency, etc. of the functions used by a user based on the history information.

The controller 160 determines a user level according to the analysis results in operation 230. That is, the storage unit 150 stores usage pattern information for each of the plurality of functions of the display apparatus 1. The controller 160 may determine a user level corresponding to each of the plurality of functions based on the usage pattern information.

Alternatively, the user level may be determined based on categories of functions. For example, the plurality of functions provided by the display apparatus 1 may be grouped as a category, each category including a plurality of functions. For example, a first function is included in a first category among the categories, and the first category includes a plurality of functions in addition to the first function.

The controller 160 analyzes a usage pattern for the first function and, at the same time, a usage pattern for functions included in the first category may be analyzed. Accordingly, the controller 160 determines a user level for the first category. For example, if a usage frequency of functions in the first category is a preset value or more, or if a usage frequency of functions categorized as advanced functions among those in the first category is a preset value or more, the controller 160 may categorize a user as having a higher degree of skill.

As described above, the user level is determined for overall functions of the first category into which the first function is included, and not only for the first function, because the functions which are included in a category are categorized based on being similar or related. Accordingly, a user who has a higher degree of skill for a function in the first category is expected to have a higher degree of skill for other functions in the first category.

The storage unit 150 stores a manual database 241 storing manual information for each function of the display apparatus 1 and sub-data explaining the functions in various manner for each manual information.

As described above, if the user level is determined, the controller 160 accesses the manual database 241 and selects the sub-data of the manual information of the first function according to the user level in operation 240. That is, as there is a preset selection condition corresponding to each user level, the controller 160 selects the sub-data for different conditions according to the determined user level. Then, the manual information image of the first function includes different content according to the determined user level. This is described later in more detail.

The controller 160 generates the manual information image through the above process in operation 250. The controller 160 controls the image processor 120 to display the generated manual information image on the display unit 130 based on preset conditions. For example, the preset conditions include a location of the manual information image in a display area of the display unit 130, display time and size of the manual information image, etc.

The database which is described above may be established by using an ontology-based knowledge modeling system. Ontology is a formal and explicit specification of shared conceptualization, and is formed by records of the database and relationship between the records. The ontology-based database has records or words that relate to a particular domain and are organized hierarchically, and includes an inference rule to extend such records or words. Ontology relates to semantic web application and enables information search by inference of meaning of a keyword instead of formal database search.

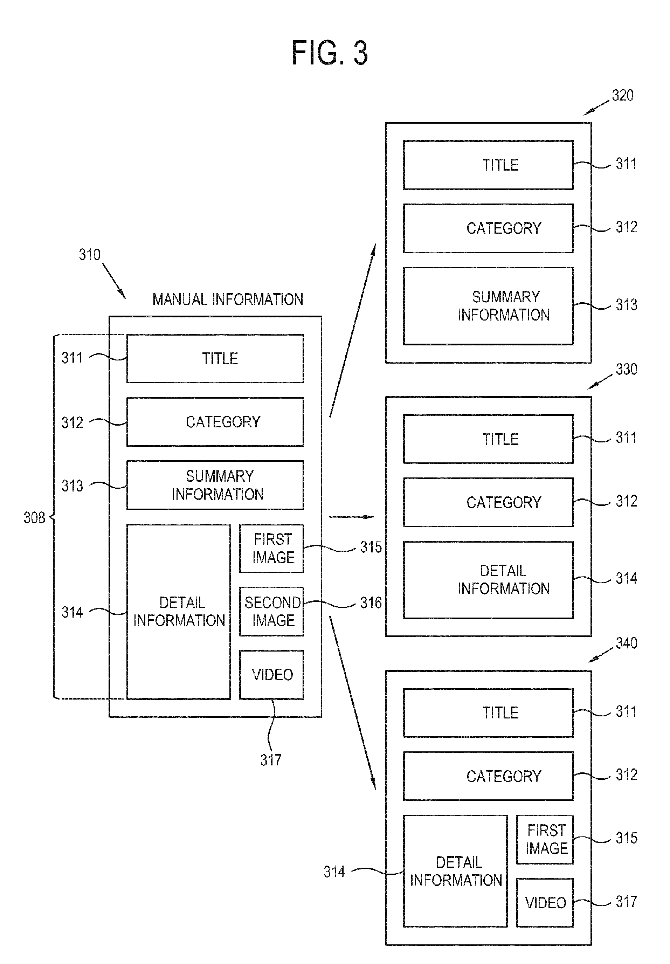

Hereinafter, an example of selecting at least one sub-data piece 308 of the manual information 310 in different manner based on user level is described with reference to FIG. 3. FIG. 3 illustrates a method of forming manual information images 320, 330 and 340 according to a user level with respect to the manual information 310 of the first function. The manual information 310 and the method of selecting the sub-data pieces 308 of the manual information 310 according to a user level which is described hereinafter is only an example and is not limiting.

The manual information 310 corresponding to the first function is stored in a manual database 241 (refer to FIG. 2) of the storage unit 150. The manual information 310 includes a plurality of sub-data pieces 308 which describes the first function in different manners.

For example, the manual information 310 includes a title 311 of a first function, a category 312 of the first function, summary information 313 summarizing the first function, detail information 314 explaining the first function in detail, first and second images 315 and 316, and a video 317 providing additional information of the first function.

If the user level for the first function is categorized as expert, intermediate and novice, the controller 160 selects the sub-data pieces 308 to make a manual information image for a higher user level simpler than a manual information image for a lower user level. For example, the controller 160 selects the title 311, the category 312 and the summary information 313 from the manual information 310 of the first function and generates a manual information image 320 with respect to the user level categorized as expert. This is because the expert has a higher degree of understanding on the information of the first function than the novice does and does not need detailed information.

The controller 160 selects the title 311, the category 312 and the detail information 314 from the manual information 310 of the first function and generates a manual information image 330 with respect to a user level categorized as intermediate. As the intermediate user is expected to need more detailed information than the expert does, the controller 160 replaces the summary information 313 with the detail information 314 and generates the manual information image 330.

The novice may need more detailed information to understand the information of the first function. Thus, the controller 160 selects the title 311, the category 312, the detail information 314, the first image 315, and the video 317 from the manual information 310 of the first function and generates the manual information image 340 with respect to the user level categorized as the novice.

Regarding providing the manual information image of the first function, the manual information image may include different explanations, data, and details corresponding to each user level.

The controller 160 may include a guide image of a function which is not used or is hardly used by a user in a manual information image when generating the manual information image. For example, the controller 160 selects a category in which the first function for which the manual information is generated, is not included, among the plurality of categories for functions, and selects and includes manual information of a second function included in the category, in a manual information image of the first function.

Then, the display apparatus 1 may introduce a new function for a user and enable a user to utilize the new function. Selection of the category and the second function may have various preset conditions, and is not limiting.

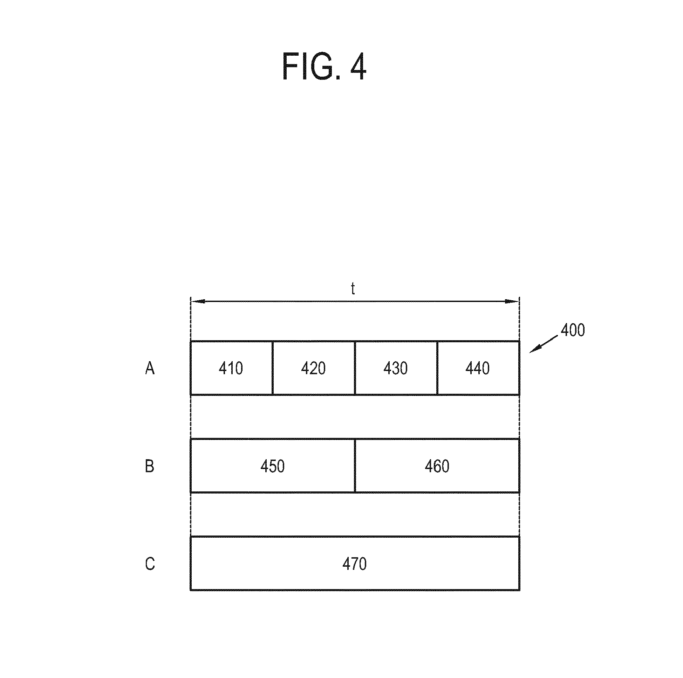

Conversion and display of manual information of a plurality of functions for preset time is described with reference to FIG. 4 which illustrates an example of converting and displaying a plurality of manual information images 400 over time. For example, the total number of the plurality of manual information images is four.

For example, the controller 160 may display all or some of the plurality of manual information images 400 for a time t upon occurrence of a predetermined event, e.g., while loading an application for execution.

For example, the user level may be categorized as expert A, intermediate B and novice C, and the controller 160 may set the number of the manual information images 400 to be converted and displayed for a time t to be different by the user level. More specifically, the controller 160 sets the number of the manual information images 400 converted and displayed for a time t to be greater in the case of the expert A having a higher user level than in the case of a user having a lower user level.

In the case of the expert A, the data included in the manual information images 400 is simplified or less detailed as described above, and, thus, the manual information images 400 of more functions may be displayed during the time t.

For example, the controller 160 converts and displays all of four manual information images 410, 420, 430, and 440 for time t in the case of the expert A.

In the case of the intermediate B, the controller 160 converts and displays two manual information images 450 and 460 out of four images of the plurality of manual information images 400 for a time t.

In the case of the novice C, the controller 160 converts and displays one manual information image 470 out of four images of the manual information images 400 for a time t.

This is because one of the manual information images 400 includes more detailed information in the case of the novice C and a novice user needs more time to understand one of the manual information images 400 than in the case of the expert A or the intermediate B.

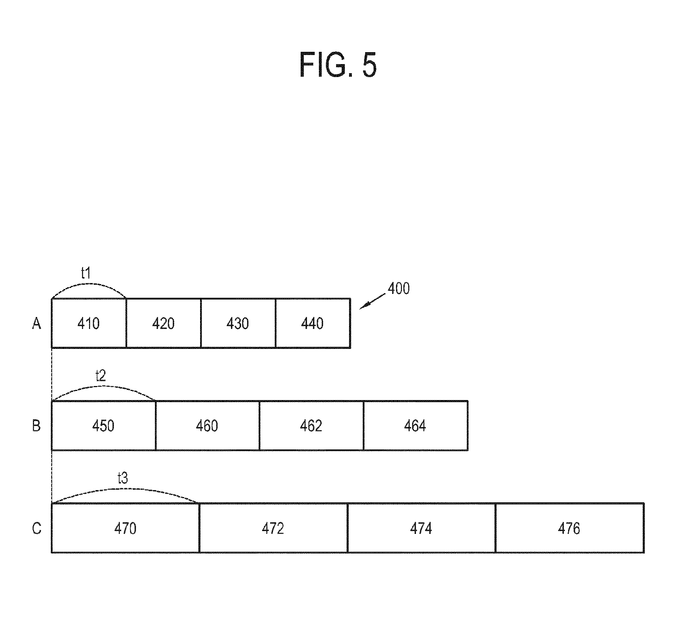

As described above, the manual information images 400 are converted and displayed for a predetermined time t. Conversion and display of all of the plurality of manual information images 400 for each user level is described with reference to FIG. 5 which illustrates converting and displaying a plurality of manual information images 400 over time.

As shown therein, the controller 160 differently sets the display time of one image of the manual information images 400 according to a user level in converting and displaying the four images of the plurality of the manual information images 400.

The display time of one image of the manual information images 410, 420, 430, and 440 is t1 for expert A. The display time of one image of the manual information images 450, 460, 462, and 464 is t2 for intermediate B. The display time of one image of the manual information images 470, 472, 474, and 476 is t3 for novice C. The controller 160 sets the display time to be t3 > t2 > t1. The lower the user level is, the more the quantity of information is included in one of the manual information images 400. Thus, a user needs more time to understand the information.

If the user level is determined, the controller 160 determines time to be taken to display one image of the manual information images 400 according to the determined user level, and converts and displays the plurality of manual information images 400 corresponding to the determined time.

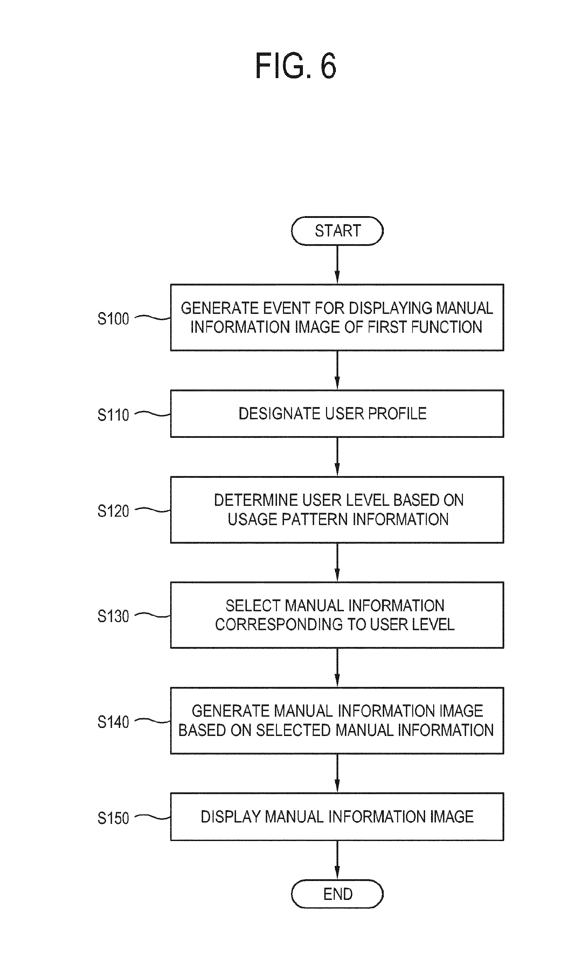

Hereinafter, a control method of the display apparatus 1 according to an exemplary embodiment is described with reference to FIG. 6. FIG. 6 is a control flowchart of the control method.

As shown therein, upon occurrence of an event for displaying a manual information image of a first function among various functions of the display apparatus 1 (operation S100), the display apparatus 1 designates a user by selecting a user profile in operation S110.

If a user is designated, the display apparatus 1 determines the user level based on the usage pattern information of the designated user in operation S120. The display apparatus 1 selects the manual information according to preset conditions corresponding to the determined user level among the plurality of manual information of the first function in operation S130.

The display apparatus 1 generates a manual information image based on the selected manual information operation S140, and displays the generated manual information image in operation S150.

According to the foregoing processes, the display apparatus 1 may display the manual information images with different contents corresponding to the user level for the first function.

The above exemplary embodiments explain the configuration of a display apparatus which displays the manual information image corresponded to a user level for a certain first function. However, it is not limited to exemplary embodiments set forth and may be embodied in various form, for example a user level may not be corresponded to a certain function.

According to an aspect of an exemplary embodiment, the display apparatus determines a user level if an event for displaying the manual information image is occurred. Namely, a user level may be determined according to the history information of a user, irrelevant to any specific function of the display apparatus. The display apparatus generates the manual information image as combining a pre-stored manual information selectively corresponding to the determined user level and displays it.

As set forth above, a display apparatus according to an exemplary embodiment includes a display unit which is configured to display a manual information image of the display apparatus; a storage unit which stores pieces of manual information in correspondence to information of user levels of the display apparatus; and a controller which determines a user level based on the stored user level information if an event for displaying the manual information image is occurred, and displays the manual information image formed by at least one of the pieces of the manual information selected differently corresponding to the determined user level among the pieces of the manual information stored in the storage unit.

Although a few exemplary embodiments have been shown and described, it will be appreciated by those skilled in the art that changes may be made in the exemplary embodiments without departing from the invention, the scope of which is defined in the claims.

## Claims

1. A display apparatus comprising:
a display unit which is configured to display a manual information image of the display apparatus;
a storage unit which stores pieces of manual information in correspondence to information of user levels of the display apparatus; and
a controller which determines a user level based on the stored user level information if an event for displaying the manual information image has occurred, and displays the manual information image formed by at least one of the pieces of the manual information selected differently corresponding to the determined user level among the pieces of the manual information stored in the storage unit.

2. The display apparatus according to claim 1, wherein if the event for displaying the manual information image relates to a first function, the controller determines the user level corresponding to the first function.

3. The display apparatus according to claim 2, wherein the user level corresponding to the first function comprises a degree of skill of a user with respect to the first function.

4. The display apparatus according to claim 3, wherein the controller stores usage pattern information for each of a plurality of functions provided by the display apparatus, and
determines the user level corresponding to the plurality of functions based on the usage pattern information.

5. The display apparatus according to claim 2, wherein a plurality of functions provided by the display apparatus is grouped into a plurality of categories, and
the controller selects a category into which the first function is categorized, among the plurality of categories, and determines the user level with respect to the selected category.

6. The display apparatus according to claim 5, wherein the user level comprises a degree of usage skill of a user with respect to the plurality of functions grouped into the selected category.

7. The display apparatus according to claim 5, wherein the controller adds content of a second function of another category into which the first function is not categorized, to the manual information image and displays the manual information image, and
the another category is a category different from the selected category.

8. The display apparatus according to claim 2, wherein the pieces of manual information comprise a plurality of constructed data pieces which explains the first function in different levels of complexity, and
the controller generates the manual information image by differently selecting data pieces from the plurality of constructed data pieces according to the determined user level.

9. The display apparatus according to claim 8, wherein the controller selects the data pieces so that the manual information image is less detailed when the user level is higher with respect to the first function than when the user level is lower with respect to the first function.

10. The display apparatus according to claim 8, wherein the display unit is configured to display a number of manual information images, and
the controller sets the number of the manual information images converted and displayed for a certain display time to be greater when the user level is higher with respect to the first function than when the user level is lower with respect to the first function.

11. The display apparatus according to any one of the preceding claims, further comprising:
an image receiver which receives an image signal; and
an image processor which processes the image signal received by the image receiver, according to an image processing operation to form an image based on the received image signal.

12. A control method of a display apparatus, the method comprising:
generating an event for displaying a manual information image of a display apparatus;
determining a user level based on user levels information pre-stored in the display apparatus; and
displaying the manual information image formed by at least one piece of manual information selected differently corresponding to the determined user level among a plurality of pieces of manual information pre-stored in the display apparatus.

13. The control method according to claim 12, wherein if the event for displaying the manual information image relates to a first function, the determining comprises determining the user level corresponding to the first function.

14. The control method according to claim 13, wherein the user level corresponding to the first function comprises a degree of skill of a user with respect to the first function.
